(19) Europäisches Patentamt
European Patent Office
Office européen des brevets

(11) EP 0 486 469 B2

(12) NEW EUROPEAN PATENT SPECIFICATION

(45) Date of publication and mention of the opposition decision:
**21.06.2000 Bulletin 2000/25**

(45) Mention of the grant of the patent:
**10.07.1996 Bulletin 1996/28**

(21) Application number: **92100915.5**

(22) Date of filing: **30.09.1987**

(51) Int. Cl.$^7$: **C08F 230/08**, C08L 83/14, C08G 77/58, C08G 77/20

# (54) Organic-inorganic hybrid polymer

Organisch-anorganisches Hybridpolymer

Polymère hybride organique-inorganique

(84) Designated Contracting States:
**DE ES FR GB IT NL SE**

(30) Priority: **03.10.1986 US 914859**

(43) Date of publication of application:
**20.05.1992 Bulletin 1992/21**

(62) Document number(s) of the earlier application(s) in accordance with Art. 76 EPC:
**87114253.5 / 0 263 428**

(73) Proprietor:
**PPG Industries Ohio, Inc.**
**Cleveland, OH 44111 (US)**

(72) Inventor: **Lin, Chia-Cheng**
**Allison Park, PA 15101 (US)**

(74) Representative:
**Fleischer, Holm Herbert, Dr. et al**
**Sternagel, Fleischer, Godemeyer & Partner**
**Patentanwälte**
**Braunsberger Feld 29**
**51429 Bergisch Gladbach (DE)**

(56) References cited:
**EP-A- 0 078 548**
**EP-A- 0 233 355**
**DD-A- 65 457**
**US-A- 4 043 953**
**US-A- 4 181 687**

- **WORLD PATENTS INDEX LATEST Week 1386, Derwent Publications Ltd., London, GB; AN 86-086148**
- **WORLD PATENTS INDEX Week 5179, Derwent Publications Ltd., London, GB; AN 79-91865B**
- **Met. Res. Soc. Symp. Proc., vol. 73, 1986, S. 739-742**
- **Walter Noll, Chemie und Technologie der Silicone, Verlag Chemie, Weinheim 1968, p. 171-172**

EP 0 486 469 B2

## Description

Field of the Invention

The present invention relates generally to the art of abrasion-resistant coatings, and more particularly to the art of abrasion-resistant inorganic coatings on abrasion-prone organic substrates.

Background

A number of patents to Yoldas and others disclose sol-gel compositions containing various components. U.S. Patent Nos. 3,941,719 and 3,944,658 to Yoldas relate to alumina sol-gels. U.S. Patents No. 4,208,475 and 4,244,986 to Paruso and Yoldas describe a liquid polymer formed from organometallic sodium and aluminum compounds.

U. S. Patent No. 4,271,210 to Yoldas discloses a method of forming an optically clear, porous metal oxide layer having a low refractive index on a glass substrate by dipping the substrate into a clear colloidal solution of metal alkoxide

U.S. Patent No. 4,278,632 to Yoldas discloses a method of forming a clear vitreous gel of silica-titania binary by preparing a clear organic solvent solution of partially hydrolyzed alkoxide of either silicon or titanium and then adding the other element in the form of alkoxide or a clear organic solvent solution of partially hydrolyzed alkoxide. The components are reacted, additional water is added to complete hydrolysis and the resulting product is then dried and heated to remove residual organic material.

U S. Patent No. 4,286,024 to Yoldas discloses a high temperature resistant transparent monolithic member or coating consisting of aluminum and silicon in a ratio of about 2:1 and in reacted oxide form, formed by reacting precursor alkoxides of aluminum and silicon in the presence of water to form a clear solution, gelling the reacted precursors, and drying the gel in the form of a monolithic member or coating on a substrate. The dried material is then heated to evolve all residual hydrogen, carbon and water and to eliminate porosity

U S. Patent No. 4,346,131 to Yoldas discloses polymerized solutions for depositing optical oxide coatings prepared by reacting metal alkoxide with a mixture of critical amounts of water and/or acid in an alcohol medium. The alkoxides may be titanium, tantalum and/or silicon.

According to these patents, hydrolytic polycondensation of metal alkoxides produces polymeric species containing alkoxy and hydroxyl pendent and terminal groups. Typical sol-gel compositions contain about 10 to 40 percent by weight organic and hydroxyl components. Heat treatment is carried out at sufficiently high temperature, generally around 500°C, to remove residual organic material.

Optical quality abrasion resistant coated plastic materials generally require a coating that protects the substrate from the damaging effects of ultraviolet (UV) radiation. Protection from ultraviolet radiation is especially important for polycarbonate, since hydrolytic degradation is apparently accelerated by UV exposure. Conventional UV stabilizers do not impart sufficient protective capacity to abrasion resistant coatings, as sufficient amounts of most typical organic UV absorbers cannot be added to abrasion resistant coatings without adversely affecting hardness and adhesion of the coating. Moreover, typical UV absorbers may gradually become deactivated after prolonged exposure, and also may gradually be leached from the composition.

Summary of the Invention

One object of the present invention is an organic-inorganic hybrid polymer comprising the reaction product prepared by polymerizing an organic monomer in the presence of the reaction product of

(a) an organofunctional alkoxysilane of the general formula $R_XSi(OR')_{4-x}$ wherein R is an organofunctional radical being capable of reacting with said organic monomer, R' is a hydrolyzable low molecular weight alkyl group, and x is at least one and less than four: and

(b) a metal alkoxide of the general formula $M(OR'')_3$ wherein M stands for aluminum and R'' represents a low molecular weight alkyl radical,

at least the organofunctional alkoxysilane (a) being at least partially hydrolyzed when reacting with the metal alkoxide (b) to form a sol.

Another object of the invention is the said inorganic-organic hybrid polymer wherein the organofunctional radical contains the acryloxy group.

Still another object of the invention is a process for the manufacture of an organic-inorganic hybrid polymer which process comprises polymerizing an organic monomer in the presence of a sol comprising the reaction product of

(a) an organofunctional alkoxysilane of the general formula $R_XSi(OR')_{4-x}$ wherein R is an organofunctional radical being capable of reacting with said organic monomer, R' is a hydrolyzable low molecular weight alkyl group, and x is at least one and less than four: and

(c) a metal alkoxide of the general formula $M(OR'')_z$ wherein M stands for aluminum, titanium, zirconium or mixtures thereof, z is the valence of M, and R'' represents a low molecular weight alkyl radical,
at least the organofunctional alkoxysilane (a) being at least partially hydrolyzed when reacting to form said sol.

A further object of the invention is the said process wherein the organofunctional radical contains the acryloxy group.

The present invention, in addition to providing abrasion resistance, involves also optimizing a variety of properties such as alkali resistance, adhesive strength, chemical resistance, water stability and index of refraction for optical coatings.

Substrates which can be improved in their abrasion resistance arid other properties with the organic-inorganic hybrid polymer of the present invention include polycarbonate and acrylic, particularly as used for vehicle transparencies. Abrasion resistance is measured by ASTM F-735 abrasion testing (Bayer abrasion) using 1000 grams of quartz sand of 6 to 14 mesh size range for 300 cycles. Coating compositions of the present invention may also be used on nonplastic substrates such as glass, ceramics and metals to improve corrosion resistance or other properties

Organic-inorganic hybrid polymers in accordance with the present invention are prepared by polymerizing an organic monomer in the presence of an inorganic oxide sol comprising an organoalkoxysilane having an organic functional group capable of reacting with said organic monomer.

Detailed Description of the Preferred Embodiment

Preparation of the Reaction Product of Components (a) and (b)

A sol-gel system for producing an organosiloxane/alumina composition may be prepared in the following manner. First, an aluminum alkoxide is hydrolyzed using water as solvent. The temperature is preferably maintained at about 80°C during hydrolysis to prevent the formation of insoluble bayerite. Various hydrolyzable aluminum alkoxides may be used to form a sol in accordance with the present invention. Preferably, aluminum alkoxides are of the general formula $Al(OR'')_3$, wherein R'' represents a low molecular weight alkyl radikal, preferably an alkyl radical of the general formula $C_nH_{2n+1}$ wherein n is from 2 to 4 Aluminum isopropoxide is a particularly preferred aluminum alkoxide. Preferably, aluminum isopropoxide is added to water which has been heated to 80°C, followed by an acid hydrolyzing agent. Various acids may be used in accordance with the present invention; both inorganic acids, such as nitric and hydrochloric acids, and organic, such as acetic and dichloroacetic acids. The basic hydrolysis reaction is illustrated below.

$$Al(OR'')_3 + y\ H_2O — Al(OR'')_{3-y}OH_y + y\ R''OH$$

The condensation reaction may involve alkoxy and/or hydroxyl groups, and produce water or alcohol according to either of the following reactions.

$$2\ Al(OR'')_{3-y}OH_y — (HO)_y(R''O)_{3-y-1}Al\text{-}O\text{-}Al(OR'')_{3-y}(OH)_{y-1} + R''OH$$

or

$$2\ Al(OR'')_{3-y}OH_y — (HO)_{y-1}(R''O)_{3-y}Al\text{-}O\text{-}Al(OR'')_{3-y}(OH)_{y-1} + H_2O$$

The hydrolysis and condensation reactions continue until substantially all of the alkoxy groups are hydrolyzed, and condensation yields a composition of aluminum-oxygen network containing pendent and terminal hydroxyl groups having the empirical formula AlO(OH).

In one preferred embodiment of the present invention, the aluminum alkoxide is added to 80°C water in a pressure vessel After the acid is added, the vessel is sealed, and the mixture is heated under pressure. Using aluminum isopropoxide, heating to 125°C for two hours, the pressure reaches about 50 psi. A clear sol is formed in hours under pressure, compared with days at ambient pressure, and precipitation of insoluble aluminum hydroxide is avoided

In a preferred embodiment of this invention, an alumina sol condenses to form a gel which is weakly crosslinked, such that when the gel is heated to approximately 60°C in a closed container, it converts back to a clear sol. The reformed sol will gel again within about 72 hours at room temperature. This reversible characteristic provides an alumina sol-gel composition with a relatively long shelf life.

After preparation of the alumina sol, an organoalkoxysilane is added. The organoalkoxysilane reacts with

the hydrolyzed alumina sol to form a silicon-oxygen-aluminum network according to the following general reaction.

$$AlO(OH) + R_xSi(OR')_{4-x} \rightarrow -O-Al-O-SiR_x(OR')_{4-x-1} + R'OH$$

In an aqueous alumina sol, the remaining alkoxy groups of the organoalkoxysilane are hydrolyzed according to the following general reaction

$$-O-Al-O-SiR_x(OR')_{4-x-1} + (4-x-1)H_2O \rightarrow -O-Al-O-SiR_X(OH)_{4-x-1} + (4-x-1)R'OH$$

Various organoalkoxysilanes may be used in accordance with the present invention. Organoalkoxysilanes of the general formula $R_XSi(OR)_{4-x}$ wherein x is less than 4 and preferably is one, R is an organic radical, and R' is a low molecular weight alkyl radical are preferred. R is preferably a low molecular weight, preferably from one to six carbon, alkyl or vinyl, methoxyethyl, phenyl, γ-glycidoxypropyl or γ-methacryloxypropyl. R' is preferably a two to four carbon alkyl group Particularly preferred organoalkoxysilanes are those wherein R is methyl and R' is ethyl; a most preferred organoalkoxysilane is methyl triethoxysilane. The organoalkoxysilane is preferably added in an amount such that the molar ratio of silica ($SiO_2$) to alumina ($Al_2O_3$) is from about 10:1 to about 1:1, more preferably from about 6:1 to 3:1.

<u>Preparation of the Reaction Product of Components (a) and (c)</u>

An organoalkoxysilane is first at least partially hydrolyzed by adding a less than equivalent quantity of water to an organoalkoxysilane in solution, preferably in alcohol. The organoalkoxysilane preferably has the general formula

$$R_xSi(OR')_{4-x}$$

wherein R is an organofunctional radical being capable of reacting with the said organic monomer, R' is a hydrolyzable low molecular weight alkyl group, and x is at least one and less than four; preferably x is 1, so that the organoalkoxysilane has three hydrolyzable sites. The organic radical R is preferably vinyl, or γ-methacryloxypropyl. Preferably, R' is selected from the group consisting of methyl, ethyl, propyl and butyl. Mixtures of organoalkoxysilanes may also be preferred. Preferably about one mole of water per mole of organoalkoxysilane is added in alcohol medium to partially hydrolyze the organoalkoxysilane according to the general reaction

$$R_xSi(OR')_{4-x} + yH_2O \rightarrow R_x\,Si(OR')_{4-x-y}(OH)_y + yR'OH$$

After the organoalkoxysilane is partially hydrolyzed, additional metal ions are incorporated in the composition by adding hydrolyzable metal alkoxides to the partially hydrolyzed organoalkoxysilane. Preferably, these additional metal alkoxides include alkoxides of the general formula

$$M(OR'')_z$$

wherein M is a metal selected from the group consisting of aluminum, titanium, zirconium and mixtures thereof, z is the valence of M and R'' is a low molecular weight alkyl radical, preferably ethyl, propyl or butyl. In addition to aluminum, titanium and/or zirconium, other metal alkoxides including such metals as tantalum, hafnium, etc., may be employed. The metal alkoxide may include an alkyl or aryl group or be in dimer or higher condensed form so long as hydrolyzable alkoxy groups remain reactive with silanol groups of the partially hydrolyzed organoalkoxysilane to copolymerize

When metal alkoxides or alkylalkoxides are introduced into the partially hydrolyzed organoalkoxysilane, the hydrolyzable alkoxy groups react with the hydroxyl bonds of the partially hydrolyzed organoalkoxysilane, condensing to form an inorganic oxide network and producing alcohol according to the general reaction:

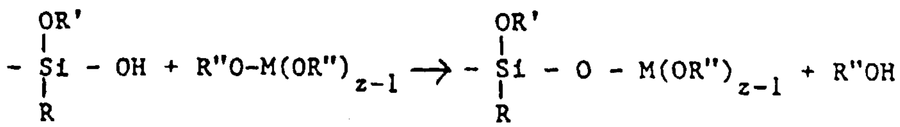

Once the metal alkoxide is reacted with the organoalkoxysilane by this reaction, the composition may be fully hydrolyzed by the addition of water, converting the alkoxy groups OR' and OR'' to hydroxyl groups without precipitation of insoluble metal hydroxides. Condensation polymerization proceeds to extend the inorganic oxide network.

Preparation of the Organic-Inorganic Hybrid Polymer

Organic-inorganic hybrid polymers in accordance with the present invention are prepared by polymerizing an organic monomer in the presence of an inorganic oxide sol comprising an organoalkoxysilane having an organic functional group capable of reacting with said organic monomer. The functional group of R is selected in accordance with the organic monomer to be subsequently polymerized. A preferred functional group is acryloxy for reaction with an acrylic monomer capable of polymerization to an acrylic polymer. A preferred organoalkoxysilane for producing hybrid polymers is γ-methacryloxypropyl trimethoxysilane.

EXAMPLE

An organic-inorganic hybrid polymer is prepared as follows. A 5 percent alumina sol is prepared by heating 900 grams of water to 80°C and adding 225 grams of aluminum isopropoxide, ($Al(OC_3H_7)_3$), and 19.8 grams of glacial acetic acid. Heating at 120°C for 2 hours in a pressure vessel produces a clear alumina sol. To 130 grams of the alumina sol is added an equimolar amount, 15.8 grams, of methacryloxypropyl trimethoxysilane

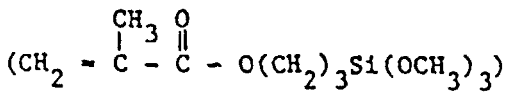

The mixture is stirred, gels in about 45 minutes, and is heated overnight at 60°C. The gel is filtered, rinsed with deionized water and dried overnight at 60°C. One hundred grams of methyl methacrylate plus 0.5 grams of azobisisobutyronitrile catalyst from Dupont are heated in a 70°C water bath for about 14 minutes before adding 11.02 grams of the gel Ultrasonic stirring for 10 minutes and heating to 70°C for 5 minutes result in a clear solution, which is cooled to ambient temperature and cast in a release-coated glass cell. The composition is cured by exposure to ultraviolet radiation of 360 nanometers for 90 minutes, followed by heating to 100°C for about 25 minutes. This new polymer has better solvent resistance than poly(methyl methacrylate), does not melt at 260°C and has a Mohs hardness of about 3.

## Claims

1. An organic-inorganic hybrid polymer comprising the reaction product prepared by polymerizing an organic monomer in the presence of a sol comprising the reaction product of

    (a) an organofunctional alkoxysilane of the general formula $R_xSi(0R')_{4-x}$ wherein R is an organofunctional radical being capable of reacting with said organic monomer, R' is a hydrolizable low molecular weight alkyl group, and x is at least one and less than four; and
    (b) a metal alkoxide of the general formula $Al(OR'')_3$ wherein R'' represents a low molecular weight alkyl radical, at least the organofunctional alkoxysilane (a) being at least partially hydrolyzed when reacting to form said sol

2. The organic-inorganic hybrid polymer of claim 1 wherein said organofunctional radical contains the acryloxy group.

3. A process for the manufacture of an organic-inorganic hybrid polymer which process comprises polymerizing an organic monomer in the presence of a sol comprising the reaction product of

    (a) an organofunctional alkoxysilane of the general formula $R_xSi(OR')_{4-x}$ wherein R is an organofunctional radical being capable of reacting with said organic monomer, R' is a hydrolizable low molecular weight alkyl group, and x is at least one and less than four; and
    (c) a metal alkoxide of the general formula $M(OR'')_z$ wherein M stands for aluminum, titanium, zirconium or mixtures thereof, z is the valence of M, and R'' represents a low molecular weight alkyl radical,
    at least the organofunctional alkoxysilane (a) being at least partially hydrolyzed when reacting to form said sol.

4. The process of claim 3 wherein the organofunctional radical contains the acryloxy group.

## Patentansprüche

1. Organisch-anorganisches Hybridpolymer, enthaltend das Reaktionsprodukt, das hergestellt wurde durch Polymerisation eines organischen Monomeren in Gegenwart eines Sols, das das Reaktionsprodukt ist aus

(a) einem organofunktionalen Alkoxysilan der allgemeinen Formel $R_xSi(OR')_{4-x}$, in der R einen organofunktionalen Rest bezeichnet, der mit dem organischen Monomeren zu reagieren vermag, R' einen hydrolysierbaren niedermolekularen Alkylrest bedeutet und x mindestens 1 und kleiner als 4 ist: und

(b) einem Metallalkoxid der allgemeinen Formel $Al(OR'')_3$, in der R'' einen niedermolekularen Alkylrest bedeutet,
wobei das organofunktionale Alkoxysilan (a) mindestens teilweise hydrolysiert wird, wenn es zu dem Sol reagiert.

**2.** Organisch-anorganisches Hybridpolymer nach Anspruch 1, wobei der organofunktionale Rest die Acryloxygruppe enthält.

**3.** Verfahren zum Herstellen eines organisch-anorganischen Hybridpolymers durch Polymerisation eines organischen Monomeren in Gegenwart eines Sols, das das Reaktionsprodukt ist aus

(a) einem organofunktionalen Alkoxysilan der allgemeinen Formel $R_xSi(OR')_{4-x}$, in der R einen organofunktionalen Rest bezeichnet, der mit dem organischen Monomeren zu reagieren vermag, R' einen hydrolysierbaren niedermolekularen Alkylrest bedeutet und x mindestens 1 und kleiner als 4 ist; und
(c) einem Metallalkoxid der allgemeinen Formel $M(OR'')_z$, in der M für Aluminium, Titan, Zirkon oder deren Gemische steht, z die Valenz von M bezeichnet und R'' einen niedermolekularen Alkylrest bedeutet,
wobei das organofunktionale Alkoxysilan mindestens teilweise hydrolysiert wird, wenn es zu dem Sol reagiert.

**4.** Verfahren nach Anspruch 3, wobei der organofunktionale Rest die Acryloxygruppe enthält.

## Revendications

**1.** Polymère hybride organique-inorganique, comprenant le produit de la réaction préparé en polymérisant un monomère organique en presence d'un sol comprenant le produit de la réaction

(a) d'un alcoxysilane organofonctionnel de la formule générale $R_xSi(OR')_{4-x}$ dans laquelle R représente un radical organfonctionnel capable de réagir avec le monomère organique précité, R' représente un radical alkyle hydrolysable de faible poids moléculaire et x est au moins égal à un inférieur à quatre et

(b) d'un alcoolate de métal alcalin de la formule générale $Al(OR'')_3$ dans laquelle R'' représente un radicale alkyle de faible poids moléculaire,
au moins l'alcoxysilane organofonctionnel (a) étant au moins partiellement hydrolysé lors de sa réaction pour former le sol précité.

**2.** Polymère hybride organique-inorganique suivant la revendivcation 1, caractérisé en ce que le radical organofonctionnel précité contient le groupe acryloxy.

**3.** Un procédé de préparation d'une polymère hybride organique-inorganique comprenant polymérisation d'un monomère organique en présence d'un sol comprenant le produit de la réaction

(a) d'un alcoxysilane organofonctionnel de la formule générale $R_xSi(OR')_{4-x}$ dans laquelle R représente un radical organofonctionnel capable de réagir avec le monomère organique précité, R' représente un radical alkyle hydrolysable de faible poids moléculaire et x est au moins égal à un et inférieur à quatre et

(c) d'un alcoolate de métal alcalin de la formule générale $M(OR'')_z$ dans laquelle M représente l'aluminium, le titane, le zirconium, ou des mélanges de ceux-ci, z représente la valence de M et R'' représente un radical alkyle de faible poids moléculaire,
au moins l'alcoxysilane organofonctionnel (a) étant au moins partiellement hydrolysé lors de sa réaction pour former le sol précité.

**4.** La procédé de la revendication 3, caractérisé en ce que le radical organofonctionnel précité contient le groupe acryloxy.